Europäisches Patentamt

European Patent Office

Office européen des brevets

(19)

(11) Numéro de publication: **0 277 893**
**B1**

(12) **FASCICULE DE BREVET EUROPEEN**

(45) Date de publication du fascicule du brevet:
18.07.90

(51) Int. Cl.⁵: **B65D 47/34**, A47K 5/12,
G01F 11/08

(21) Numéro de dépôt: 88420019.7

(22) Date de dépôt: 21.01.88

(54) Distributeur pour produit pateux à poussoir axial rotatif.

(30) Priorité: 23.01.87 FR 8701212

(43) Date de publication de la demande:
10.08.88 Bulletin 88/32

(45) Mention de la délivrance du brevet:
18.07.90 Bulletin 90/29

(84) Etats contractants désignés:
AT BE CH DE ES FR GB GR IT LI LU NL SE

(56) Documents cités:
EP-A- 0 048 421
FR-A- 2 393 279
FR-A- 2 530 586
FR-A- 2 581 370
US-A- 4 241 854
US-A- 4 336 895

(73) Titulaire: CEBAL, 98, boulevard Victor Hugo,
F-92115 Clichy(FR)

(72) Inventeur: Schneider, Bernard, 4, rue des Six Frères,
F-51800 Sainte Menehould(FR)

(74) Mandataire: Vanlaer, Marcel et al, PECHINEY 28, rue de
Bonnel, F-69433 Lyon Cédex 3(FR)

**Description**

L'invention concerne un distributeur pour produit pâteux comportant des moyens d'acheminement de ce produit de l'intérieur d'un corps tubulaire jusqu'à un orifice de distribution par compression et aspiration successives, le produit pâteux étant supporté par un piston qui coulisse dans la jupe du corps tubulaire. Le terme **"produit pâteux""** désigne ici tout produit de consistance pâteuse pouvant être distribué au moyen d'un tel distributeur, qu'il soit qualifié de pâte, de gel ou de crème.

**ETAT DE LA TECHNIQUE CONNUE ET EXPOSE DU PROBLEME**

Le distributeur du document EP-A-0048421 (=US-A-4394939) comporte un actionneur dont l'enforcement, qui écrase le dôme déformable de la tête limitant la chambre de compression, n'est pas guidé et présente un caractère aléatoire, peu satisfaisant pour l'utilisateur. La fabrication, avec 8 pièces à assembler, en est compliquée.

Le distributeur du document FR-A-2581370 comporte un actionneur qui produit un basculement et affaissement orienté de la tête, mais cet appui basculant, qui a tendance à chasser sous le doigt qui appuie, n'est pas non plus entièrement satisfaisant. La fabrication du distributeur comporte des difficultés de réalisation au niveau de certaines des 5 ou 6 pièces à assembler.

Les distributeurs décrits dans le document EP-A-0013 691 ont un actionneur en forme de poussoir, retenu sur le distributeur, qui coulisse axialement par rapport à une partie tubulaire rigide du distributeur, constitué soit par le sommet du corps du distributeur, soit par une chambre circulaire de la tête de distribution.

Le poussoir coopère avec un élément élastique du type ressort ou à effet ressort dans la direction axiale, permettant l'enfoncement du poussoir qui produit la diminution du volume de la chambre de compression, et produisant la remontée du poussoir lorsque celui-ci n'est plus appuyé. La chambre de compression est comprise entre le sommet du corps du distributeur, portant une valve d'aspiration du produit pâteux dans cette chambre à partir de l'intérieur de ce corps et des éléments de la structure de la tête de distribution incluant une valve d'expulsion du produit pâteux de la chambre de compression dans le conduit de distribution.

Des inconvénients apparaissent, en particulier:
- la poussé axiale de l'actionneur est réalisée, mais il n'y a pas de moyen de verrouillage du poussoir, ni de possibilité de réglage intermédiaire du **"dosage"**, c'est-à-dire de la quantité du produit délivré;
- en fin de vidage, il reste un volume mort, ou volume du produit pâteux non distribué, important.

La demanderesse a cherché à mettre au point un distributeur ne présentant pas le premier inconvénient, et ayant de préférence un volume résiduel en fin de vidage faible.

**EXPOSE DE L'INVENTION**

L'invention a pour objet un distributeur qui, comme il est connu par le document EP-A- 0048421, comprend :

a) un corps qui comporte un corps tubulaire et un piston glissant à l'intérieur de ce corps tubulaire et, à son sommet, une valve ou une soupape d'aspiration du produit pâteux dans une chambre de compression;

b) une tête de distribution comprenant elle-même :
- des éléments limitant la chambre de compression
- un actionneur fixé à une tubulure supérieure de l'élément déformable limitant cette chambre de compression, ledit actionneur coopérant avec ledit élément qui permet son enfoncement, entraînant une diminution du volume de la chambre de compression, et qui produit le rappel de l'actionneur en position haute, ledit actionneur portant un conduit de distribution ;
- une valve d'expulsion du produit pâteux dans le conduit de distributtion, placée à la sortie de la chambre de compression.

Selon l'invention, l'actionneur comporte d'une part, une partie tubulaire extérieure, typiquement en forme de jupe, fixée sur le sommet du corps et surmontant ce sommet, et d'autre part un poussoir portant une butée latérale d'enfoncement ainsi que ledit conduit de distribution, ledit poussoir étant fixé à la sortie de la chambre de compression et comportant aussi une paroi latérale extérieure permettant son coulissement axial et sa rotation à l'intérieur de ladite partie tubulaire extérieure, laquelle comprend un bord supérieur empêchant l'enfoncement du poussoir lorsque ladite butée latérale surmonte ledit bord et au moins une découpure dans laquelle s'engage cette butée latérale en position d'enfoncement dudit poussoir, ladite découpure limitant alors cet enfoncement.

Le jeu entre le poussoir et la surface intérieure du coulissement de la partie tubulaire extérieure est typiquement compris entre 0,15 et 0,8 mm au rayon - Le bord supérieur de la partie tubulaire extérieure, c'est-à-dire sa ou ses portions de bord de niveau le plus élevé, empêche tout enfoncement du poussoir conduisant à une distribution du produit pâteux lorsque la butée latérale de ce poussoir le surmonte.

En position haute du poussoir, correspondant à la position détendue des moyens élastiques qui agissent sur lui, le dessous de la butée latérale du poussoir est au niveau du bord supérieur ou légèrement au-dessus, le petit enfoncement du poussoir alors possible vis-à-vis de ce bord supérieur, habituellement inférieur à 1 mm, n'entraînant pas de délivrance de produit. Pour donner une sécurité supplémentaire vis-à-vis de distributions indésirables, le bord supérieur qui contrôle les enfoncements du poussoir peut comporter une partie d'entrée légèrement inclinée, aboutissant à une partie éventuellement horizontale sur laquelle l'appui de la butée latérale correspond à une légère mise en traction des moyens élastiques qui coopèrent avec le poussoir, et/ou une encoche de faible hauteur bloquant la rotation de la butée latérale et obligeant à associer à la rotation du poussoir un léger soulèvement pour le dégager de l'encoche et parvenir à une position d'enfoncement.

Il y a une ou plusieurs découpures de la partie tubulaire extérieure, les enfoncements correspondants du poussoir correspondant à des **"dosages"** ou quantités de produit pâteux délivrés choisies. Le profil de découpe de chaque découpure est de préférence choisi en fonction du profil de la butée latérale du poussoir, de façon à procurer un bon appui, sans basculement, de cette butée lors de l'enfoncement du poussoir. Il y a typiquement 1 à 4 découpures, correspondant surtout à des **"dosages différents"** (enfoncements complet ou partiels), et consécutives ou séparées par des portions de **"bord supérieur"** au-dessus desquelles la butée latérale passe en rotation sans appui du poussoir.

L'actionneur peut être rendu inviolable au moyen d'un ou plusieurs ponts cassables obtenus par moulage et reliant la partie tubulaire extérieure et la poussoir en position haute, la butée latérale de ce poussoir étant au-dessus d'une découpure de ladite partie tubulaire, ce qui permet de rompre les ponts par simple enfoncement du poussoir. Ces ponts cassables sont typiquement au nombre de 2 à 5 et de section droite unitaire 0,3 à 0,5 x 0,6 à 0,8 mm, leur matière qui est commune à la partie tubulaire extérieure et au poussoir étant souvent du polyéthylène moyenne ou haute densité (PE.HD) ou bien du polypropylène (PP).

Les dispositions qui précèdent sont avantageusement associées à une coupelle tubulaire déformable élastiquement dans le sens axial et délimitant la chambre de compression, qui a alors un volume réduit et dont l'écrasement par enfoncement du poussoir contribue de façon décisive à l'obtention d'un volume résiduel faible en fin de vidage du distributeur.

Cette coupelle tubulaire déformable est fixée de façon étanche au corps du distributeur et au poussoir, à l'intérieur de la partie tubulaire extérieure de l'actionneur, et elle constitue elle-même les moyens élastiques coopérant avec le poussoir. Sa fixation au poussoir permet au moins une rotation relative de ce poussoir suffisante pour que sa butée latérale d'enfoncement puisse passer d'une débouchure à un bord supérieur. La coupelle tubulaire déformable est obtenue par moulage et habituellement en l'une des matières suivantes:

les polymères thermoplastiques, les résines silicones, les caoutchoucs synthétiques thermoplastiques, matières ayant une souplesse satisfaisante ainsi qu'un bon glissement sur le polyéthylène haute densité et le polypropylène.

De préférence pour l'étanchéité et la rotation relative du poussoir, celui-ci comprend sous son voile d'appui une cheminée axiale qui emboîte une tubulure supérieure de la coupelle déformable, cette cheminée du poussoir et cette tubulure supérieure de la coupelle déformable portant des moyens complémentaires circulaires de fixation étanche. Ce moyens complémentaires de fixation étanches pour le produit pâteux sont typiquement une nervure circulaire extérieure de la tubulure et une gorge circulaire intérieure de la cheminée, les surfaces cylindriques et les surfaces de la gorge et de la nervure étant en ajustement glissant permettant la rotation, c'est-à-dire avec des jeux diamétraux de préférence compris entre 0,05 et 0,15 mm.

De façon particulièrement avantageuse pour la fabrication et pour le fonctionnement, la valve d'expulsion du produit pâteux de la chambre de compression dans le conduit de distribution est réalisée de la façon suivante:

la tubulure supérieure de la coupelle déformable est surmontée d'une lèvre supérieure souple qui s'applique au repos sur le dessous du voile d'appui du poussoir au fond de la cheminée, et qui s'en écarte légèrement en laissant passer le produit pâteux lors de la compression.

La tubulure supérieure surmontée de cette lèvre a ainsi, avec la cheminée, un triple rôle: fixation étanche du poussoir de la chambre de compression, alignement élastique du poussoir et rotation relative étanche de ce poussoir.

La coupelle tubulaire déformable est de préférence fixée sur le sommet du corps du distributeur à l'aide de la partie tubulaire extérieure de l'actionneur, de la façon suivante: la coupelle tubulaire déformable comprend un rebord inférieur circulaire qui porte sur une surface périphérique d'appui du sommet du corps du distributeur, et qui est serré sur cette surface par une surface intérieure d'appui de la partie tubulaire extérieure lorsque cette partie tubulaire est fixée à un niveau inférieur de ce sommet, par exemple par encliquetage.

La tête peut avoir des structures de distribution différentes, correspondant à des usages différents.

En particulier, correspondant typiquement à un distributeur pris dans une main et actionné avec le pouce ou l'index de cette main, le conduit de distribution est à sortie latérale, et la partie extrême de ce conduit constitue alors sa butée latérale d'enfoncement.

En deuxième lieu, correspondant principalement à un distributeur ou pot posé sur un plan d'appui ou encore à un applicateur appuyé d'une main, par exemple un applicateur de crème, il s'agit plus précisément d'un poussoir à cheminée coopérant avec une coupelle tubulaire déformable à la fois pour la fixation étanche de cette dernière avec possibilité de rotation relative et pour former avec le dessous de son voile d'appui une valve d'expulsion, et alors le conduit de distribution est constitué par un volume limité du fond de la cheminée, le voile d'appui comportant à l'inférieur de cette cheminée plusieurs orifices situés centre le pourtour de la surface d'application de la lèvre supérieure souple de la coupelle tubulaire déformable et le diamètre interne de ladite cheminée.

Dans ce deuxième cas, le voile d'appui du poussoir peut encore comporter un orifice de sortie central situé en face de l'extrémité haute de la tubulure supérieure de la coupelle tubulaire déformable, cette coupelle comportant un clapet tronconique de fermeture de cet orifice de sortie, ledit clapet étant lié à la tubulure supérieure par des arceaux élastiques. Cet orifice de sortie a typiquement une surface intérieure d'ouverture sensiblement tronconique avec un angle total de cône compris entre 70 et 100°, et la surface latérale du clapet de fermeture est sensiblement tronconique avec un angle total de cône inférieur de 20 à 40° audit angle total du cône de l'orifice de sortie. Les arceaux et le clapet sont typiquement en polyester-éther comme la coupelle et ces arceaux de section droite unitaire 1 à 2 mm2, sont au moins au nombre de 3 pour le maintien dans l'axe du clapet tronconique.

La mise au point du distributeur selon l'invention a conduit, notamment pour sa simplicité de construction, à utiliser de préférence, en plus de la tête de distribution selon la présente invention, l'un et/ou l'autre des deux dispositions suivantes intéressant le corps du distribuer :

a) une soupape d'aspiration particulière, dont le siège annulaire est une partie du voile supérieur du sommet du corps du distributeur, autour d'un orifice central de ce voile, et dont le clapet mobile dans cet orifice comporte un rebord annulaire s'appliquant sur ledit siège annulaire ainsi que, en dessous de l'orifice, des reliefs de retenue. Ce clapet peut être moulé en une pièce avec le sommet du corps sur l'extrémité supérieure du corps tubulaire, ou bien rapporté par encliquetage de ses reliefs de retenue dans l'orifice.

b) un moyen particulier d'inviolabilité du piston glissant et de fuite d'air lors de l'insertion de ce piston dans le corps tubulaire, consistant en un relief intérieur transversal situé au bas de la jupe cylindrique de ce corps tubulaire et de diamètre intérieur minimal inférieur de 0,3 à 1,5 mm, et de préférence de 0,4 à 1,2 mm, au diamètre intérieur de cette jupe, et en une zone d'entrée évasée de ce relief de diamètre intérieur décroissant depuis un diamètre d'engagement libre de la lèvre supérieure évasée souple du piston jusqu'au diamètre intérieur minimal ci-dessus constituant un diamètre de rétreint dynamique de ladite lèvre lors de l'introduction du piston.
Ces deux dispositions préférées non encore divulguées sont décrites dans deux demandes de brevet français récentes.

Les exemples et les dessins permettront d'illustrer et de détailler les différents aspects de l'invention.
L'actionneur de l'invention et la coupelle tubulaire déformable qui lui est typiquement associée présentent les avantages suivants :
- sécurité de non enfoncement du poussoir, c'est-à-dire de non distribution indésirable de produit, éventuellement du type **"sécurité enfant"** grâce à un bord supérieur de la partie tubulaire extérieure comportant une encoche de blocage des rotations sans soulèvement du poussoir.
- choix de **"dosage(s)"** précis, par réglage de la géométrie des découpures en tenant compte de la géométrie du dessous de la butée latérale d'appui, des changements de **"dosages"** et/ou de dispositions du bord supérieur, ou bords de sécurité de non enfoncement du poussoir, demandant seulement un changement de la partie tubulaire extérieure de la tête du distributeur;

- fabrication et assemblage particulièrement simples. Lorsqu'une coupelle tubulaire déformable est comprise dans l'actionneur, le montage de la tête sur le corps du distributeur comprend typiquement deux actions simples:
fixation de la coupelle déformable dans le poussoir, puis verrouillage simultané de la partie tubulaire extérieure de l'actionneur et de l'extrémité inférieure de la coupelle sur le sommet du corps du distributeur;
- volume résiduel en fin de vidage particulièrement faible dans le cas de la coupelle tubulaire déformable qui réalise une chambre de compression intérieure au volume compris entre l'actionneur et le sommet du corps et fortement comprimable.

## EXEMPLES

La figure 1 représente l'actionneur d'un poussoir exemple de distributeur selon l'invention en vue de face du côté de son orifice latéral de distribution.
La figure 2 représente le même actionneur en coupe axiale passant par l'axe du conduit de distribution.
La figure 4 représente le distributeur de ce premier exemple, en coupe axiale longitudinale.
La figure 5 représente un détail de la fixation de la coupelle déformable dans la cheminée du poussoir, en coupe axiale.
La figure 6 représente un deuxième exemple de distributeur selon l'invention, dont le poussoir comporte plusieurs orifices supérieurs de distribution, en coupe axiale longitudinale.
La figure 7 repésente un troisième exemple de distributeur, analogue au deuxième mais dont le poussoir présente une surface d'appui bombée.
La figure 8 représente un quatrième exemple de distributeur, à orifice central de distribution, en coupe axiale longitudinale, et la figure 9 représente en particulier son clapet tronconique de fermeture.

## PREMIER EXEMPLE

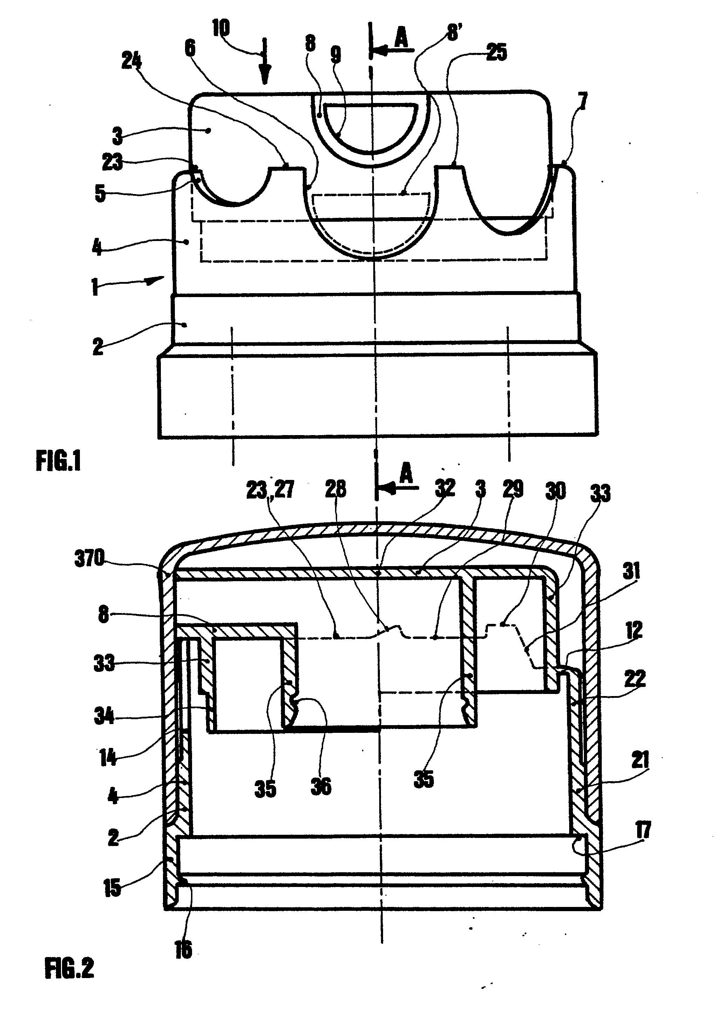

Sur la figure 1, on peut voir un actionneur 1 comprenant une partie tubulaire extérieure 2 et un poussoir 3 coulissant axialement dans la partie 2, ce poussoir 3 étant situé en position haute, c'està-dire dans la position correspondant à l'absence d'appui du poussoir 3 lorsque le distributeur est assemblé. Dans sa portion supérieure 4 dans laquelle coulisse le poussoir 3, il y a trois découpures 5,6,7 de profondeur différente dans lesquelles peut s'engager sélectivement le conduit de distribution 8 portant l'orifice 9. Comme cela est figuré pour la découpure centrale 6 correspondant à l'enfoncement maximal et donc au **"dosage"** maximal du produit pâteux, le conduit 8 dont la partie extrême a une largeur de 9 mm et un dessous cylindrique demi-circulaire pourra en fonctionnement, c'est-à-dire sous une pression axiale représentée par la flèche 10,s'engager facilement dans cette découpure de profondeur 7 mm et d'entrée large de 10 mm se raccordant à un fond demi-circulaire de diamètre 100 mm également, jusqu'à la position de butée 8' définissant parfaitement la fin de l'enfoncement du poussoir. Les découpures 5 et 7 sont de profondeurs respectives 3 et 5 mm, comportant aussi un contour semi-circulaire de diamètre 10 mm.

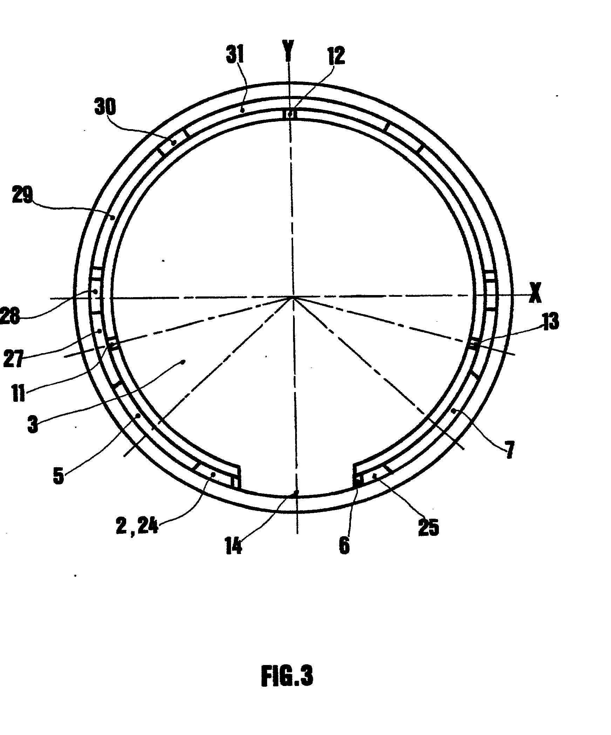

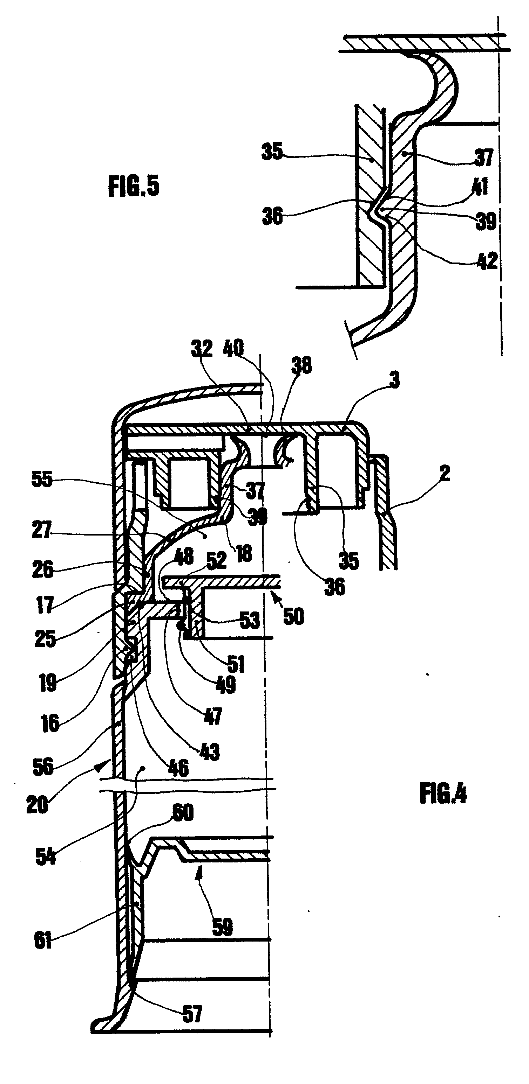

En se reportant également aux figures 2 et 3, on peut voir que la partie tubulaire extérieure 2 et le poussoir 3 moulés monobloc en polypropylène sont reliés par trois ponts cassables 11,12,13, de section transversale unitaire 0,5 x 0,8 mm, situés respectivement à -75°, +75° et 180° du milieu 14 de la débouchure centrale 6. La partie tubulaire extérieure 2 comporte de bas en haut une portion 15 de fixation par une nervure intérieure circulaire 16 sur le sommet du corps du distributeur, de diamètre extérieure 33,5 mm et d'épaisseur 1 mm, puis un changement de diamètre définissant une surface intérieure horizontale périphérique 17 d'appui de la coupelle tubulaire déformable 18 (figure 4) alors de la fixation de cette coupelle sur le sommet 19 du corps 20 (figure 4 également), puis la portion supérieure 4, dans laquelle coulisse le poussoir, de diamètre intérieur 29,5 mm et d'épaisseur 1 mm dans sa partie basse 21 et 0,8 mm dans sa partie haute 22 qui comporte les débouchures 5,6,7 de réglage des enfoncements et le bord supérieur 23 de non-enfoncement du poussoir 3 et est reliée au poussoir 3 par les ponts cassables 11, 12 et 13.

Ce bord supérieur 23, dont l'appui par le conduit de distribution 8 empêche toute délivrance de produit pâteux, comporte de courtes portions horizontales 24 et 25 entre les débouchures 5,6 et 6,7, puis successivement à l'intérieur et de chaque côté de cette série de débouchures: une portion horizontale 27 suivie d'une partie légèrement inclinée 28 réalisant une dénivellation de 1 mm et d'une encoche 29 de largeur 10 mm et de profonedeur 1 mm, puis d'une portion 30 de bord supérieur servant de rebord de blocage, et la portion arrière 31 qui est rattrappée progressivement et est située au niveau du pont cassable 12. Le positionnement du conduit 8 du poussoir 3 dans l'encoche 29 permet d'éviter les rotations non désirables du poussoir, ce qui est intéresssant pour les voyages ou vis-à-vis des jeunes enfants.

Le poussoir 3 (figure 2) comporte un voile supérieur 32 plan d'épaisseur 0,8 mm et une paroi latérale coulissante cylindrique circulaire 33 de diamètre extérieur 28,5 mm et d'épaisseur 1 mm, prolongé sur sa moitié avant centrée sur le conduit 8 par une jupe plus mince 34 de protection ou masquage de la coupelle tubulaire déformable 18 en face des débouchures. Il comporte aussi une cheminée axiale 35 de diamètre intérieur 13 mm dans laquelle débouche le conduit de distribution 8 de hauteur intérieure 3,5 mm. La cheminée 35 de hauteur 11,5 mm à partir du voile supérieur 32 porte une gorge intérieure circulaire 36 de fixation étanche de la coupelle tubulaire déformable 18. L'extrémité proprement dite du conduit 8 dépasse légèrement la partie du haut 22 de la jupe tubulaire extérieure 2, elle est serrée par le capot 370 qui s'emboîte sur la jupe 2 avec un serrage limité à la partie basse 21 de cette jupe 2.

La figure 4 représente le distributeur assemblé, comprenant en particulier la coupelle tubulaire déformable 18 fixée dans la cheminée 35 du poussoir 3 et sur le sommet 19 du corps 20 du distributeur.

Le schéma de la figure 5 montre les profils complémentaires de la nervure 39 et de la gorge d'encliquetage 36, donnant une bonne résistance à l'arrachement et, en association avec le faible jeu des portions cylindriques 37 et 35, une très bonne étanchéité au produit pâteux.

La surface supérieure 41 de la nervure 39 fait un angle de 30° avec la direction axiale tandis que sa surface inférieure 42 est de 60°. Son rayon d'extrémité en section axiale est de 0,5 mm et la gorge 36 à un profil complémentaire de celui de la nervure 38, avec entre ces profils un jeu de 0,1 mm aussi bien sur les diamètres que sur les hauteurs.

La coupelle déformable 18 étant ainsi fixée dans le poussoir 3, son rebord inférieur 25 est verrouillé (figure 4) entre la surface périphérique d'appui 43 du sommet 19, surface qui comprend comme le dessous du rebord 25 une portion circulaire plane et un chanfrein périphérique, et la surface intérieure périphérique 17 de la jupe tubulaire extérieure 2, cette jupe étant fixée sur le sommet 19 par encliquetage à force de sa nervure intérieure 16 dans la gorge 46 de ce sommet.

Sur la figure 4, on voit encore que le sommet 19 porte un orifice central 47 de diamètre 22 mm entouré d'une surface annulaire plane 48, et, engagé dans cet orifice 47 par l'encliquetage de ses bossages de retenue 49 de diamètre de cylindre circonscrit 23,5 mm, un clapet 50 comportant au-dessus de sa portion cylindrique 51 coulissant dans l'orifice 47 un voile d'obturation plan 52, doit le rebord annulaire ou pourtour s'applique de façon étanche sur la surface annulaire 48. La portion cylindrique 51 comporte des reliefs arrondis longitudinaux de guidage 53 de diamètre hors-tout 20,5 mm et des portions cylindriques en retrait de diamètre 19 mm, de façon à optimiser le passage du produit pâteux de la chambre de stockage 54 dans la chambre de compression 55 et le coulissement du clapet 50 dans l'orifice 47. Ce clapet 50 a été moulé en même temps que le sommet 3, auquel il était relié par un voile circulaire cassable, sur la jupe cylindrique circulaire 56, et ensuite on a effectué par pression verticale la rupture de ce voile de liaison et l'encliquetage des bossages 49 dans l'orifice 47.

On voit encore au bas de la jupe cylindrique 56 de diamètre extérieur 35 mm et d'épaisseur 1 mm en polyéthylène un relief intérieur transversal 57 de diamètre intérieur minimal 32,2 mm, précédé d'une zone d'entrée évasée 58, tronconique de révolution autour de l'axe longitudinal de la jupe 57, de demi-angle de cône de 15° et avec un diamètre d'engagement de 34 m. Le piston 59 en PE-HD a une lèvre supérieure souple évasée 60, de diamètre d'extrémité au repos 33,3 mm, et une partie médiane cylindrique 61 de diamètre extérieur 31,5 mm passsant librement au travers du relief intérieur 57 lors de l'introduction du piston 59. Comme on l'a observé avec étonnement, lors de l'introduction du piston après remplissage du distributeur dans les conditions industrielles, la vitesse d'introduction étant comprise entre 40 et 300 m/s, le rétreint transversal opéré par la zone d'entrée 58 et le relief 57 produit sur l'extrémité amincie de la lèvre supérieure 50 de petites ondulations transversales persistant suffisamment pour permettre l'expulsion de l'air compris entre le piston 59 qui s'enfonce dans la jupe 56 et le produit pâteux.

## DEUXIEME EXEMPLE

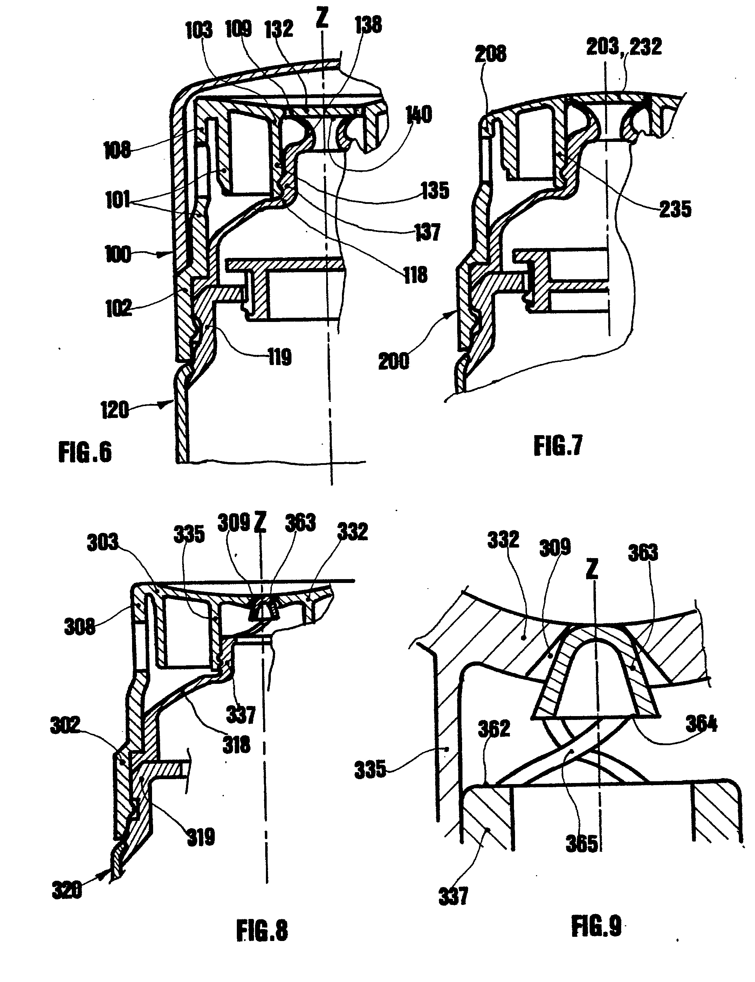

La figure 6 représente la tête d'un distributeur 100 du deuxième type, utilisé comme pot de distribution fixe ou posé sur un plan d'appui, la jupe tubulaire extérieure 102 de son actionneur 101 et sa coupelle tubulaire déformable en polyester-éther 118 étant fixée sur le sommet 119 du corps 120 du distributeur 100 comme dans le premier exemple. Le poussoir 103 est fixé par sa cheminée 135 de diamètre intérieur 13 mm sur la tubulure supérieure 137, dans les mêmes conditions géométriques que précédemment. Le poussoir 103 comporte une butée latérale d'enfoncement 108 jouant le même rôle que l'extrémité du conduit de distribution 8 du premier exemple. La lèvre supérieure souple 138 surmontant la tubulure 137 s'applique avec un diamètre extérieur de 8,5 mm sur la surface de dessous 140 du voile d'appui 132, ce diamètre extérieur d'application s'élargissant à un peu plus de 9 mm lors de l'enfoncement du poussoir 103, et le produit pâteux s'échappant alors par 6 orifices 10 de diamètre 1,5 mm espacés régulièrement et compris entre un cercle de diamètre 10 mm centré sur l'axe longitudinal Z et le diamètre 13 mm de fond de cheminée. Le conduit de distribution est ici le fond de la cheminée 135.

## TROISIEME EXEMPLE

Alors que le poussoir 103 du distributeur 100 a un voile d'appui 132 en creux, l'utilisateur pressant le pourtour et recueillant ensuite le produit expulsé par les orifices 109, le poussoir 203 du distributeur 200 de la figure 7 portant de même une butée latérale d'enfoncement 208 a un voile supérieur 232 légèrement bombé, presque plan au droit de la cheminée 235 et arrondi sur le pourtour, permettant l'emploi en applicateur.

## QUATRIEME EXEMPLE

Les figures 8 et 9 montrent une tête dont la jupe tubulaire extérieure 302 a la même géométrie et la même fixation que celle du deuxième exemple. Le poussoir 303 portant une butée latérale 308 et la coupelle déformable 318 en polyester-éther sont assemblés de la même façon que dans les exemples précédents avec le sommet 319 du corps 320. En particulier, la fixation de la tubulure supérieure 337 de la coupelle 318 dans la cheminée 335 de diamètre intérieur 13 mm est la même que précédemment. Mais le voile 332 d'épaisseur 1,2 mm du poussoir 303 comporte ici un orifice unique central 309, sensiblement tronconique de révolution autour de l'axe Z avec un diamètre de sortie de 4 mm et un angle total de cône de 90° (figure 9). Et l'extrémité supérieure 362 de la tubulure 337 porte, non pas une lèvre supérieure d'étanchéité, mais un clapet 363 en forme de calotte creuse d'extrémité supérieure fermée de diamètre 4,5 à 5 mm, et légèrement arrondie, et de surface latérale tronconique d'angle total de cône 60°, la base 364 de ce clapet 363 étant reliée à l'extrémité supérieure 362 de la tubulure 337 par 3 arceaux élastiques 365 de section droite unitaire 1 x 1,2 mm. La hauteur du clapet 363 est de 3 mm, sa base 364 est à 3,5 mm au-dessus de l'extrémité supérieure 362 en position non enforcée du poussoir 303, le clapet 363 étant alors plaqué de façon étanche dans l'orifice 309 grâce à la mémoire élastique des arceaux souples 365, dont la position de moulage correspond à un écartement de 4,2 mm entre la base du clapet et l'extrémité 362 de la tubulure 337.

Lors d'un enfoncement du poussoir, la pression du produit pâteux agit plus fortement sur la surface latérale extérieure du clapet 363, plus grande que sa surface intérieure, et écarte donc le clapet 363 de l'orifice 309 en laissant passer du produit pâteux.

## Revendications

1. Distributeur pour produit pâteux comprenant:
   a) un corps (20;120;320) qui comporte un corps tubulaire et un piston (59) glissant à l'intérieur de ce corps tubulaire et, à son sommet (19; 119; 319) une valve ou une soupape d'aspiration (48 et 50) du produit pâteux dans une chambre de compression (55);
   b) une tête de distribution comprenant:
   - des éléments limitant la chambre de compression (18 et 32; 118 et 132; 318 et 335 et 332 et 363)
   - un actionneur (1) fixé à une tubulure supérieure (37;137;237) de l'élément déformable (18;118;318) limitant cette chambre de compression (55), ledit actionneur (1) coopérant avec ledit élément (18; 118; 318) qui permet son enfoncement, entraînant une diminution du volume de la chambre de compression (55), et qui produit le rappel de l'actionneur (1) en position haute, ledit actionneur (1) portant un conduit de distribution (8);
   - une valve d'expulsion (38 et 32; 138 et 132; 363 et 309) du produit pâteux dans le conduit de distribution (8) placée à la sortie de la chambre de compression (55);
   caractérisé en ce que l'actionneur (1) comporte d'une part une partie tubulaire extérieure (2; 102; 302) fixée au sommet (19; 119; 319) du corps (20) et surmontant ce sommet, et d'autre part un poussoir (3; 103; 203; 303) portant une butée latérale d'enfoncement (8; 108; 208; 308) ainsi que ledit conduit de distribution (8), ledit poussoir étant fixé à la sortie de la chambre de compression (55) et comportant aussi une paroi latérale extérieure (33) permettant son coulissement axial et sa rotation à l'intérieur de ladite partie tubulaire extérieure (2; 102; 302), laquelle comprend un bord supérieur (23) empêchant l'enfoncement du poussoir lorsque ladite butée latérale surmonte ledit bord (23) et au moins une découpure (6) dans laquelle s'engage cette butée latérale (8) en position d'enfoncement dudit poussoir, ladite découpure (6) limitant alors cet enfoncement.

2. Distributeur selon la revendication 1, caractérisé en ce que la partie tubulaire extérieure (2) de l'actionner (1) comporte plusieurs découpures (5,6,7) définissant des niveau d'appui différents de la butée latérale (8), permettant dans dosages différents du produit pâteux.

3. Distributeur selon l'une quelconque des revendications 1 ou 2, caractérisé en ce que l'actionneur (1) comporte au moins un pont cassable (11,12,13) reliant la partie tubulaire extérieure (2) au poussoir (3) situé en position haute, sa butée latérale (8) étant à l'aplomb d'une découpure (6) de ladite partie tubulaire (2).

4. Distributeur selon l'une quelconque des revendications 1 à 3, caractérisé en ce que la tête de distribution comprend une coupelle tubulaire déformable (18; 118; 318) fixée de façon étanche au corps (20; 120; 320) du distributeur et au poussoir (3; 103; 203; 303) à l'interieur de la partie tubulaire extérieure (2; 102; 302) de l'actionneur (1; 101), ladite coupelle délimitant la chambre de compression (55) et constituent les moyens élastiques à effet ressort coopérant avec le poussoir.

5. Distributeur selon la revendication 4, caractérisé en ce que le poussoir comprend sous un voile d'appui (32; 132; 232; 332) une cheminée (35; 135; 235; 335) et en ce que la coupelle tubulaire déformable (18; 118; 318) comprend une tubulure supérieure (37; 137; 237), qui s'engage dans cette cheminée, ladite cheminée et ladite tubulure supérieure portant des moyens complémentaires circulaires (36; 39) de fixation étanche de la tubulure (37) dans la cheminée (35).

6. Distributeur selon la revendication 5, caractérisé en ce que la tubulure supérieur (37; 137) de la coupelle tubulaire déformable (18; 118) est surmontée d'une lèvre supérieure souple (38; 138) qui forme avec le dessous (40; 140) du voile d'appui (32; 132) au fond de la cheminée (35; 135) du poussoir (3; 103) la valve d'expulsion du produit pâteux dans le conduit de distribution (8).

7. Distributeur selon l'une quelconque des revendications 4,5 ou 6, caractérisé en ce que la coupelle tubulaire déformable (18; 108; 318) comprend en rebord inférieur circulaire (25) qui, au montage de la partie tubulaire extérieure (2; 102; 302) de l'actionneur (1) sur le corps (20; 120; 320) du distributeur, est serré entre une surface périphérique d'appui (47) du sommet (19) dudit corps (20) et une surface intérieure d'appui (17) de ladite partie tubulaire extérieure (2; 102; 302).

8. Distributeur selon l'une quelconque des revendications 1 à 4, caractérisé en ce que le conduit de distribution (8) du poussoir (3) est à sortie latérale et constitue sa butée latérale d'enfoncement (8).

9. Distributeur selon l'une quelconque des revendications 5 ou 6, caractérisé en ce que le conduit de distribution (8) du poussoir (3) débouche dans sa cheminée (35) sous son voile d'appui(32) et est à sortie latérale, et en ce que ce conduit (8) constitue la butée latérale d'enfoncement (8) dudit poussoir (3).

10. Distributeur selon la revendication 6, caractérisé en ce que le conduit de distribution est le fond de la cheminée (135; 235), le voile d'appui (132; 232) du poussoir (103; 203) y comportant plusieurs orifices (109) situés entre le pourtour de la surface d'application de la lèvre supérieure souple (138) de la coupelle tubulaire déformable (118) et le diamètre interne de ladite cheminée (135).

11. Distributeur selon la revendication 5, caractérisé en ce que le conduit de distribution est le fond de la cheminée (335), et en ce que le voile d'appui (332) du poussoir (303) comporte un orifice de sortie (309) située en face de l'extrémité (362) de la tubulure supérieure (337) de la coupelle tubulaire déformable (318), cette coupelle (318) comportant un clapet tronconique (363) de fermeture de cet orifice de sortie (309), ledit clapet (363) étant lié à la tubulure supérieure (337) par des arceaux élastiques (365).

12. Distributeur selon la revendication 11, caractérisé en ce que l'orifice de sortie (309) du voile d'appui (332) du poussoir (303) a une surface intérieure d'ouverture sensiblement tronconique avec un angle total de cône compris entre 70 et 100°, et en ce que la surface latérale du clapet de fermeture (363) est sensiblement tronconique avec un angle total de cône inférieur de 20 à 40° audit angle total de cône de ladite surface intérieure d'ouverture de l'orifice de sortie (309).

13. Distributeur selon l'une quelconque des revendications 1 ou 2, dont le sommet (19) du corps (20) comporte un orifice central (47) entouré d'une surface annulaire d'appui (48) constituant le siège de la soupape d'aspiration (48 et 50), le clapet (50) de cette soupape étant constitué d'un voile d'obturation (52), dont le rebord annulaire s'applique de façon étanche sur ladite surface annulaire d'appui (48) en position de fermeture de la soupape, et d'une portion sousjacente (51) engagée dans ledit orifice central (47) et munie à sa partie inférieure de reliefs de retenue (49).

14. Distributeur selon l'une quelconque des revendications 1,2 ou 13, dans lequel le corps tubulaire comporte une jupe cylindrique circulaire (56), et le piston (59) soutenant le produit pâteux comporte lui-même une lèvre supérieure évasée souple (60) coulissant de façon étanche à l'intérieur de ladite jupe (56), une partie médiane (61) en retrait par rapport à la surface inférieure de ladite jupe (56) et une extrémité inférieure évasée semi-rigide coulissant avec un léger jeu ou un léger forcement à l'intérieur de ladite jupe (56), caractérisé en ce que ce corps tubulaire comporte un moyen d'inviolabilité et de fuite d'air, lors de l'insertion du piston (59) dans ce corps (20), consistant en un relief intérieur transversal (57) situé au bas de ladite jupe cylindrique (56) et de diamètre intérieur minimal inférieur de 0,3 à 1,5 mm au diamètre intérieur de ladite jupe (56), ainsi qu'en une zone d'entrée évasée de ce relief (57) de diamètre intérieur décroissant depuis un diamètre d'engagement au moins égal au diamètre extérieur à l'état libre de ladite lèvre supérieure souple (60) du piston (59) jusqu'audit diamètre intérieur minimal dudit relief transversal (57), et en ce que le diamètre extérieur de ladite partie médiane (61) du piston (59) est inférieur d'au moins 0,3 mm audit diamètre intérieur minimal dudit relief (57).

## Claims

1. Distributor for a pasty product comprising:
a) a body (20; 120; 320) which is made up of a tubular body and a piston (59) sliding in the interior of this tubular body and, at its top (19, 119; 319) a suction valve or closure (48 and 50) for aspirating the pasty product into a compression chamber (55);
b) a distribution head comprising:
– elements bounding the compression chamber (18 and 32; 118 and 132; 318 and 335 and 332 and 363)
– an actuator (1) fixed to an upper pipe (37; 137; 237) of the deformable element (18; 118; 318) bounding this compression chamber (55), said actuator (1) co-operating with said element (18; 118; 318) which allows it to be driven in, bringing about a reduction in the volume of the compression chamber (55), and which produces the return of the actuator (1) into the upper position, said actuator (1) bearing a distribution duct (8);
– an expulsion valve (38 and 32; 138 and 132; 363 and 309) for expelling the pasty product in the distribution duct (8) placed at the outlet of the compression chamber (55);
characterised in that the actuator (1) comprises, on the one hand, an external tubular part (2; 102; 302) fixed on the top (19; 119; 319) of the body (20) and surmounting this top and, on the other hand, a push-piece (3; 103; 202; 303) bearing a lateral driving-in stop (8; 108; 208; 308) as well as said distribution duct (8), said push-piece being fixed to the outlet of the compression chamber (55) and also comprising a lateral external wall (33) allowing its axial sliding and its rotation in the interior of said external tubular part (2; 102; 302), which comprises an upper edge (23) preventing the driving-in of the push-piece when said lateral stop surmounts said edge (23) and at least one cut-out (6) in which this lateral stop (8) engages in the driving-in position of said push-piece, said cut-out (6) therefore limiting this driving-in.

2. Distributor according to claim 1, characterised in that the external tubular part (2) of the actuator (1) comprises a plurality of cut-outs (5, 6, 7) defining different levels of support of the lateral stop (8), permitting different dosages of the pasty product.

3. Distributor according to any one of claims 1 or 2, characterised in that the actuator (1) comprises at least one breakable bridge (11, 12, 13) connecting the external tubular part (2) to the push-piece (3) situated in upper position, its lateral stop (8) being perpendicular to a cut-out (6) of said tubular part (2).

4. Distributor according to any one of claims 1 to 3, characterised in that the distribution head comprises a deformable tubular cap (18; 118; 318) fixed in a tight manner to the body (20; 120; 320) of the distributor and to the push-piece (3; 103; 203; 303) in the interior of the external tubular part (2; 102; 302) of the actuator (1; 101), said cap delimiting the compression chamber (55) and constituting the spring effect elastic means co-operating with the push-piece.

5. Distributor according to claim 4, characterised in that the push-piece comprises, beneath a bearing web (32; 132; 232; 332) a shaft (35, 135; 235; 335) and in that the tubular deformable cap (18; 118; 318) comprises an upper pipe (37; 137; 237), which engages in this shaft chamber, said shaft and said upper pipe bearing complementary circular means (36; 39) for the tight attachment of the pipe (37) in the shaft (35).

6. Distributor according to claim 5, characterised in that the upper pipe (37; 137) of the deformable tubular cap (18; 118) is surmounted by a flexible upper lip (38; 138) which forms, with the underpart (40; 140) of the bearing web (32; 132) at the foot of the shaft (35; 135) of the push-piece (3; 103), the valve for the expulsion of the pasty product in the distribution duct (8).

7. Distributor according to any one of claims 4, 5 or 6 characterised in that the deformable tubular cap (18; 108; 318) comprises a lower circular rim (25) which is pressed between a peripheral support surface (47) of the top (19) of said body (20) and an internal support surface (17) of said external tubular part (2; 102; 302;) when the external tubular part (2; 102; 302) of the actuator (1) is mounted on the body (20; 120; 320) of the distributor.

8. Distributor according to any one of claims 1 to 4, characterised in that the distribution duct (8) of the push-piece (3) has a lateral outlet and constitutes its lateral driving-in stop (8).

9. Distributor according to any one of claims 5 or 6, characterised in that the distribution duct (8) of the push-piece (3) opens out in its shaft (35) beneath its bearing web (32), and has a lateral outlet, and in that this duct (8) constitutes the lateral driving-in stop (8) of said push-piece (3).

10. Distributor according to claim 6, characterised in that the distribution duct is the base of the shaft (135; 235), the bearing web (132; 232) of the push-piece (103; 203) comprising a plurality of orifices (109) situated between the periphery of the application surface of the upper flexible lip (138) of the deformable tubular cap (118) and the internal diameter of the said shaft (135).

11. Distributor according to claim 5, characterised in that the distribution duct is the base of the shaft chamber (335), and in that the bearing web (332) of the push-piece (303) comprises an outlet orifice (309) situated opposite the end (362) of the upper pipe (337) of the deformable tubular cap (318), this cap (318) comprising a valve (363) in the form of a truncated cone for the closure of this outlet orifice (309), said valve (363) being connected to the upper pipe (337) by elastic arches (365).

12. Distributor according to claim 11, characterised in that the outlet orifice (309) of the bearing web (332) of the push-piece (303) has an interior opening surface substantially in the shape of a truncated cone with a total cone angle comprised between 70 and 100°, and in that the lateral surface of the closure valve (363) is substantially in the shape of a truncated cone, with a total cone angle 20 to 40° smaller than said total cone angle of said interior opening surface of the outlet orifice (309).

13. Distributor according to any one of claims 1 or 2, of which the top (19) of the body (20) comprises a central orifice (47) surrounded by an annular support surface (48) constituting the seat of the suction closure (48 and 50), the valve (50) of this closure being constituted by a shut-off web (52), the annular rim of which is applied in a tight manner to said annular support surface (48) in the closed position of the closure, and of a subjacent portion (51) engaged in said central orifice (47) and provided on its lower part with retention reliefs (49).

14. Distributor according to any one of claims 1, 2 or 13, in which the tubular body comprises a circular cylindrical skirt (56), and the piston (59) supporting the pasty product itself comprises a flexible upper flared lip (60) sliding in a tight manner in the interior of said skirt (56), a median part (61) recessed in relation to the lower surface of said skirt (56) and a lower flared, semi-rigid end sliding with a slight play or a slight forcing in the interior of said skirt (56), characterised in that this tubular body comprises a means for inviolability and for the escape of air, on insertion of the piston (59) in the body (20), consisting of an internal transverse relief (57) situated at the foot of said cylindrical skirt (56) and with a minimum internal diameter 0.3 to 1.5 mm smaller than the internal diameter of said skirt (56), and with a minimum internal diameter 0.3 to 1.5 mm smaller than the internal diameter of said skirt (56), as well as by a flared inlet zone of this relief (57) with an internal diameter decreasing from an engagement diameter at least equal to the external diameter in the free state of said upper flexible lip (60) of the piston (59) up to said minimum internal diameter of said transverse relief (57), and in that the external diameter of said median part (61) of the piston (59) is at least 0.3 mm smaller than said minimum internal diameter of said relief (57).

**Patentansprüche**

1. Spender für pasteuse Produkte mit:
a) einem Körper (20, 120; 320), der einen rohrförmigen Körper und einen Kolben (59) aufweist, der im Inneren dieses rohrförmigen Körpers gleitet und an seiner Spitze (19; 119; 319) ein Ventil oder ein Ansaugventil (48 und 50) aufweist, durch das das pasteuse Produkt in einer Kompressionskammer (55) gesaugt wird;
b) einem Verteilungskopf mit:
– die Druckkammer (18 und 32; 118 und 132; 318 und 335 und 332 und 363) begrenzenden Elementen,
– einem Betätigungsorgan (1), das an einer Rohranordnung (37; 137; 237) oberhalb des verformbaren Elements (18; 118; 318), das diese Druckkammer (55) begrenzt, angeordnet ist, wobei das Betätigungsorgan (1) mit diesem Element (18; 118; 318), das dessen Eindrücken ermöglicht, zusammenwirkt, was zu einer Volumenverringerung der Kompressionskammer (55) führt und das Betätigungsorgan (1) in dessen obere Position zurückholt, wobei das Betätigungsorgan (1) eine Verteilungsleitung (8) trägt; und
– ein Austrittsventil (38 und 32; 138 und 132; 363 und 309) für das pasteuse Produkt in der Verteilungsleitung (8), das am Ausgang der Kompressionskammer (55) angeordnet ist;
dadurch gekennzeichnet, daß das Betätigungsorgan (1) einerseits einen Teil einer äußeren Rohranordnung (2; 102; 302) aufweist, die an der Spitze (19; 119; 319) des Körpers (20) angeordnet ist und diese Spitze übersteigt und andererseits einen Druckkopf (3; 103; 203; 303), der einen seitlichen Eindrückanschlag (8; 108; 208; 308) sowie die Verteilerleitung (8) aufweist, wobei der Druckkopf am Ausgang der Druckkammer (55) befestigt ist und ebenfalls eine äußere Seitenwand (33) aufweist, die dessen axiale Verschiebung und dessen Drehung im Inneren des äußeren rohrförmigen Teils (2; 102; 302) ermöglicht, wobei dieser Teil einen oberen Rand (23) aufweist, der das Eindringen des Druckkopfes verhindert, während der seitliche Anschlag den Rand (23) übersteigt und mindestens einen Ausschnitt (6), in dem dieser seitliche Anschlag (8) in eingedrückter Stellung des Druckkopfes rastet, wobei dieser Einschnitt (6) das Eindringen begrenzt.

2. Spender nach Anspruch 1, dadurch gekennzeichnet, daß der äußere rohrförmige Bereich (2) des Betätigungsorgans (1) mehrere Ausschnitte (5, 6, 7) aufweist, die verschiedene Eindrückhöhen des seitlichen Anschlags (8) definieren, wodurch verschiedene Dosierung des pasteusen Produktes ermöglicht werden.

3. Spender nach einem der Ansprüche 1 oder 2, dadurch gekennzeichnet, daß das Betätigungsorgan (1) mindestens einen abbrechbaren Steg (11, 12, 13) aufweist, der den äußeren rohrförmigen Bereich (2) mit dem Druckkopf (3) in dessen oberen Stellung verbindet, wobei dessen seitlicher Anschlag (8) senkrect zu einem Ausschnitt (6) des rohrförmigen Teils (2) angeordnet ist.

4. Spender nach einem der Ansprüche 1–3, dadurch gekennzeichnet, daß der Verteilerkopf eine verformbare rohrförmige Schale (18; 118; 318) aufweist, die dicht auf dem Körper (20; 120; 320) des Spenders und auf dem Druckkopf (3; 103; 203; 303) im Inneren des äußeren rohrförmigen Bereichs (2; 102; 302) des Betätigungsorgans (1; 101) befestigt ist, wobei die Schale die Druckkammer (55) begrenzt und das elastische Organ mit Federwirkung bildet, das mit dem Druckkopf zusammenwirkt.

5. Spender nach Anspruch 4, dadurch gekennzeichnet, daß der Druckkopf unter einer Andruckmembran (32, 132; 232; 332) einen Abzug (35; 135; 235; 335) aufweist und dadurch, daß die rohrförmige verformbare Schale (18; 118; 318) eine obere Rohranordnung (37; 137; 237) aufweist, die in diesen Abzug eingreift, wobei dieser Abzug und die obere Rohranordnung komplementäre runde Befestigungsorgane (36; 39) zur dichten Befestigung der Rohranordnung (37) in dem Abzug (35) eingreift, wobei dieser Abzug und die obere Rohranordnung komplementäre runde Befestigungsorgane (36; 39) zur dichten Befestigung der Rohranordnung (37) in dem Abzur (35) aufweisen.

6. Spender nach Anspruch 5, dadurch gekennzeichnet, daß die obere Rohranordnung (37; 137) der verformbaren rohrförmigen Schale (18; 118) von einer oberen weichen Lippe (38; 138) umgeben ist, die mit der Unterseite (40; 140) der Andruckmembran (32; 132) am Boden des Abzugs (35; 135) des Druckkopfes (3; 103) das Auslaßventil des pasteusen Produktes in die Verteilerleitung (8) bildet.

7. Spender nach einem der Ansprüche 4, 5 oder 6, dadurch gekennzeichnet, daß die verformbare rohrförmige Schale (18; 108; 318) einen unteren kreisförmigen Rand (25) aufweist, der bei dem Zusammensetzen des äußeren rohrförmigen Teils (2; 102; 302) des Betätigungsorgans (1) auf dem Körper (2; 120; 320) des Spenders zwischen einer äußeren Andruckfläche (47) der Spitze (19) des Körpers (20) und einer inneren Andruckfläche (17) des äußeren rohrförmigen Bereichs (2; 102; 302) eingeklemmt ist.

8. Spender nach einem der Ansprüche 1–4, dadurch gekennzeichnet, daß die Verteilerleitung (8) des Druckkopfes (3) seitlich austritt und den seitlichen Anschlag des Eindrückens des Druckkopfes (8) bildet.

9. Spender nach einem der Ansprüche 5 oder 6, dadurch gekennzeichnet, daß die Verteilerleitung des Druckkopfes (3) in dessen Abzug (35) unter der Andruckmembran (32) mündet und seitlich austritt und dadurch, daß die Leitung (8) den seitlichen Anschlag der Eindringbewegung des Druckkopfes (3) bildet.

10. Spender nach Anspruch 6, dadurch gekennzeichnet, daß die Verteilerleitung der Boden des Abzuges (135; 235) ist und die Andruckmembran (132; 232) des Druckkopfes (103; 203) mehrere Öffnungen (109) aufweist, die zwischen dem Umfang der Anlagefläche der weichen oberen Lippe (138) der rohrförmigen verformbaren Schale (118) und dem inneren Durchmesser des Abzuges (135) gelegen ist.

11. Spender nach Anspruch 5, dadurch gekennzeichnet, daß die Verteilerleitung der Boden des Abzugs (335) ist und dadurch, daß die Andruckmembran (332) des Druckkopfes (303) eine Ausgangsöffnung (309) aufweist, die gegenüber dem Ende (362) der oberen Rohranordnung (337) der verformbaren rohrförmigen Schale (318) angeordnet ist, wobei diese Schale (318) eine kegelstumpfförmige Klappe (363) zum Verschließen dieser Ausgangsöffnung (309) aufweist, wobei diese Klappe (363) mit der oberen Rohranordnung (337) über elastische Bügel (365) verbunden ist.

12. Spender nach Anspruch 11, dadurch gekennzeichnet, daß die Ausgangsöffnung (309) der Andruckmembran (332) des Druckkopfes (303) eine innere im wesentlichen kegelstumpfförmige Öffnungsfläche hat mit einem Konuswinkel zwischen 70 und 100° und dadurch, daß die Seitenfläche der Verschlußklappe (363) im wesentlichen kegelstumpfförmig ist mit einem Konuswinkel, der 20 bis 40° kleiner als der Konuswinkel der Innenfläche der Ausgangsöffnung (309) ist.

13. Spender nach einem der Ansprüche 1 oder 2, dessen Spitze (19) des Körpers (20) eine mittlere Öffnung (47) aufweist, die mit einer ringförmigen Auflagefläche (48) umgeben ist, die den Sitz des Ansaugventils (48 und 50) bildet, wobei die Klappe (50) dieses Ventils aus einer Verschlußmembran (52) besteht, deren ringförmiger Rand sich dicht auf die ringförmige Auflagefläche (48) in Schließstellung des Ventils anlegt und ferner gebildet wird aus einem darunterliegenden Bereich (51), der in die mittlere Öffnung (47) eingreift und in ihrem unteren Teil mit einem Ruckhalteprofil (49) versehen ist.

14. Spender nach einem der Ansprüche 1, 2 oder 13, bei dem der rohrförmige Körper einen kreiszylinderförmigen Mantel (56) aufweist und der Kolben (59), der das pasteuse Produkt hält, selbst eine weiche obere ausgebauchte Lippe (60) aufweist, die dicht im Inneren des Mantels (56) gleitet, wobei ein mittlerer Bereich (61), der bezüglich der inneren Oberfläche des Mantels (56) zurückgesetzt und ein inneres halbsteifes ausbauchendes Ende mit einem Spiel oder unter geringer Krafteinwirkung im Inneren des Mantels (56) gleitet, dadurch gekennzeichnet, daß der rohrförmige Körper ein unzerstörbares Organ zum Ablassen von Luft während der Einführung des Kolbens (59) in den Körper (20) aufweist, bestehend aus einem inneren transversalen Profil (57), das im unteren Teil des zylinderförmigen Mantels (56) angeordnet ist und dessen kleinster unterer Inenendurchmesser zwischen 0,3 und 1,5 mm kleiner als der Innendurchmesser des Mantels (56) ist sowie aus einer ausbauchenden Eingangszone des Profils (57) mit einem abnehmenden Innendurchmesser aus den von einem Eingriffsdurchmesser her mindestens gleich dem Außendurchmesser der oberen weichen Lippe (60) des Kolbens (59) im unbelasteten Zustand ist bis zum minimalen Innendurchmesser des transversalen Profils (57) und dadurch, daß der Außendurchmesser des mittleren Bereichs (61) des Kolbens (59) mindestens 0,3 mm kleiner als der minimale Innendurchmesser des Profils (57) ist.

EP 0 277 893 B1

FIG.1

FIG.2

EP 0 277 893 B1

FIG.3

FIG.5

FIG.4

FIG.6

FIG.7

FIG.8

FIG.9